## Europäisches Patentamt

## European Patent Office

## Office européen des brevets

(11) Veröffentlichungsnummer: **0 121 047**
**A1**

(12) # EUROPÄISCHE PATENTANMELDUNG

(21) Anmeldenummer: **84100994.7**

(22) Anmeldetag: **01.02.84**

(51) Int. Cl.³: **A 01 G 17/10**

(30) Priorität: **01.03.83 DE 3307136**

(43) Veröffentlichungstag der Anmeldung:
**10.10.84 Patentblatt 84/41**

(84) Benannte Vertragsstaaten:
**AT BE CH DE FR IT LI NL**

(71) Anmelder: **Locher, Josef Friedrich**
**Reutenenweg 4**
**D-7990 Friedrichshafen 5(DE)**

(72) Erfinder: **Locher, Josef Friedrich**
**Reutenenweg 4**
**D-7990 Friedrichshafen 5(DE)**

(74) Vertreter: **Engelhardt, Guido, Dipl.-Ing.**
**Montafonstrasse 35 Postfach 1350**
**D-7990 Friedrichshafen 1(DE)**

(54) **Vorrichtung zur Abstützung von an einem Baumstamm angewachsenen Ästen.**

(57) Zur Abstützung von an einem Baumstamm angewachsenen Ästen dient ein dreiteiliger starrer Haltebügel (11), dessen eines Ende als an dem Baumstamm einhängbare Klammer (12) und dessen anderes über ein Zwischenstück (14) mit dieser verbundenes Ende als auf einem Ast aufliegendes Stützglied (13) ausgebildet ist.

Dadurch ist es möglich, die Äste in kurzer Zeit und auf einfache Weise in eine gewünschte etwa waagrecht gerichtete Zwangslage zu bringen, so daß diese in die Breite wachsen und der Ertrag gesteigert wird.

FIG. 3

EP 0 121 047 A1

**DIPL.-ING. GUIDO ENGELHARDT  PATENTANWALT** 0121047

7990 Friedrichshafen

Josef Friedrich Locher
7990 Friedrichshafen 5

Vorrichtung zur Abstützung von an einem
Baumstamm angewachsenen Ästen

Die Erfindung bezieht sich auf eine Vorrichtung zur Abstützung von an einem Baumstamm angewachsenen Ästen.

Bei neu angepflanzten Obstbäumen werden deren Äste, um den Ertrag zu steigern, vielfach gezwungen, etwa in waagrechter Richtung zu wachsen. Dies wird in der Weise bewerkstelligt, daß im vorderen Bereich eines Astes jeweils eine Schnur oder ähnliches Bindematerial angebracht wird, das am Stamm des Baumes oder einer zentral zu diesem angeordneten Stange befestigt wird. Auf diese Weise kann zwar verhindert werden, daß die Äste nach oben wachsen, sich zu stark ausbilden und dabei nahezu den gesamten aus dem Erdreich aufgenommenen Saft verbrauchen, der Zeitaufwand für diese von Hand auszuführenden Arbeiten ist aber außerordentlich groß und da die Äste diese Zwangslage bis zu 3 Jahre lang beibehalten sollen, verrottet mitunter

./.

- 2 -

auch das Bindematerial oder dieses wird durch Windein-wirkungen zerstört, so daß ständig Nacharbeiten nahezu unumgänglich sind. Des weiteren sind die Menge des dazu erforderlichen Bindematerials und die dadurch anfallenden Kosten erheblich.

Aufgabe der Erfindung ist es daher, eine Vorrichtung zur Abstützung von an einem Baumstamm angewachsenen Ästen zu schaffen, mittels der die Äste leicht in eine gewünschte etwa waagrecht gerichtete Zwangslage gebracht werden können. Dies soll nicht nur auf sehr einfache Weise und ohne Schwierigkeiten ermöglicht werden, sondern vor allem soll dies in kurzer Zeit zu berwerkstelligen sein, wobei auch die Wachstumsrichtung eines Astes problemlos ge-gebenenfalls nachträglich verändert werden kann. Ferner soll der Materialaufwand gering gehalten werden.

Gemäß der Erfindung ist die Vorrichtung zur Abstützung von an einem Baumstamm angewachsenen Ästen gekennzeichnet durch einen dreiteiligen starren Haltebügel, dessen eines Ende als an dem Baumstamm einhängbare Klammer und dessen anderes über ein Zwischenstück mit dieser verbundenes Ende als auf einem Ast aufliegendes Stützglied ausgebildet ist.

Die Klammer des Haltebügels kann hierbei in einfacher Ausgestaltung aus einem etwa rechtwinklig von dem Mittelstück abstehenden U-förmig gebogenen Haken gebildet werden, dessen parallel zueinander verlaufende über einen Mittelsteg miteinander verbundene Schenkel an dem Baumstamm abgestützt sind.

./.

Hierbei ist es angebracht, an dem Ende des freien Schenkels des Hakens einen etwa parallel zu dem Mittelstück verlaufenden entgegengesetzt zu diesem gerichteten Haltesteg anzuformen. Zu dem gleichen Zweck können aber auch die Schenkel des Hakens entgegengesetzt zueinander konvex gekrümmt ausgebildet werden. Dadurch ist zuverlässig ein seitliches Abrutschen des Hakens ausgeschlossen.

Das Stützglied ist zweckmäßigerweise als ein von dem Mittelstück abstehender Auflagesteg oder als kreisförmig gebogene Öse auszubilden, der etwa parallel zu dem an dem Mittelstück angeformten Schenkel des Hakens verläuft. Auch der Auflagesteg des Stützgliedes kann konvex gekrümmt gestaltet und an dem freien Ende des Auflagesteges kann ein entgegengesetzt zu dem Mittelsteg des Hakens verlaufender Ansatz, um eine sichere Auflage zu gewährleisten, angeformt werden.

Der Haltebügel kann aus einem metallischen Stabmaterial, vorzugsweisee aus verzinktem Draht, gebogen oder aus einem witterungsbeständigen Kunststoff hergestellt werden.

Die gemäß der Erfindung ausgebildete Vorrichtung zur Abstützung von an einem Baumstamm angewachsenen Ästen ist nicht nur sehr einfach in der konstruktiven Ausgestaltunh und damit auf wirtschaftliche Weise herstellbar, sondern mit deren Hilfe ist es bei einfacher Handhabung in kurzer Zeit möglich, den Ästen eine bestimmte Wachstumsrichtung aufzuzwingen. Wird nämlich zur Abstützung der Äste eines Baumes ein dreiteiliger Haltebügel vorgesehen, dessen eines Ende als an dem Baum einhängbare Klammer und dessen anderes über ein Zwischenstück mit dieser verbundenes Ende als auf einem Ast aufliegendes Stützglied ausgebildet ist, so können die Äste leicht in eine nahezu

./.

waagrechte Lage gebracht werden, ohne daß dies einen großen Zeit- und Arbeitsaufwand erfordert. Die als offener Haken ausgebildete Klammer ist dazu lediglich an dem Baumstamm einzuhängen und dabei derart in der Höhe auszurichten, daß durch das Stützglied auf den Ast eine entsprechende Kraft ausgeübt wird, um diesen in die gewünschte Lage zu drücken. Bindearbeiten sind somit nicht mehr erforderlich, auch können die Haltebügel, da sie aus witterungsbeständigem Material bestehen, mehrfach verwendet werden. Des weiteren ist von Vorteil, daß die Äste auch während des Wachsens geführt sind und daß deren Wachstumsrichtung leicht, auch nachträglich, durch eine Höhenverschiebung des Haltebügels geändert werden kann. Die vorschlagsgemäß ausgebildete Vorrichtung ermöglicht somit bei hoher Zuverlässigkeit und Störunempfindlichkeit eine weitaus rationellere Arbeitsweise als bisher.

In der Zeichnung ist ein Ausführungsbeispiel der gemäß der Erfindung ausgebildeten Vorrichtung zur Abstützung von an einem Baumstamm angewachsenen Ästen dargestellt. Hierbei zeigt:

Fig. 1    den die Abstützvorrichtung bildenden dreiteiligen Haltebügel in einer perspektivischen
          Darstellung,

Fig. 2    die Anordnung des Haltebügels nach Fig. 1
          an einem Baum und

Fig. 3    eine Seitenansicht des Haltebügels gemäß
          Fig. 2

./.

- 5 -

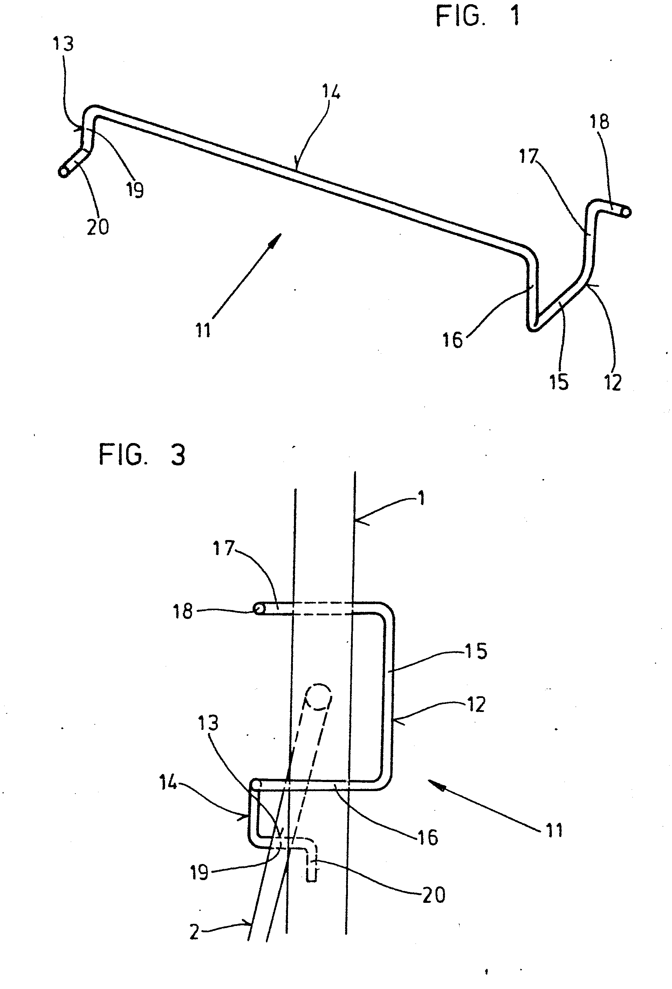

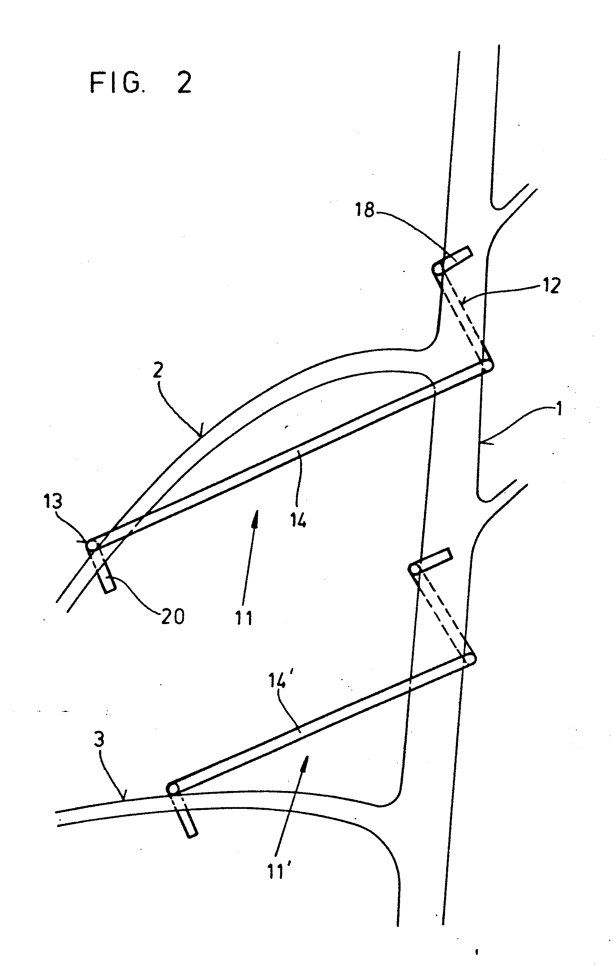

Der in Fig. 1 dargestellte und mit 11 bezeichnete aus verzinktem Draht oder Kunststoff hergestellte Haltebügel dient, wie dies in Fig. 2 gezeigt ist, zur Abstützung von an einem Baumstamm 1 eines Obstbaumes angewachsenen Ästen 2 und 3, damit diese in eine vorgegebene Richtung wachsen, und besteht aus einer an einem Mittelteil 14 an dessen einem Ende angeformter Klammer 12 und einem an dem anderen Ende angeformten Stützglied 13. Die Klammer 12, die als U-förmig gebogener offener Haken aus einem Mittelstück 15 und zwei Schenkeln 16 und 17 gebildet ist, ist in den Baumstamm 1 durch eine Schwenkbewegung einhängbar und das als etwa rechtwinklig von dem Mittelstück 14 abstehender Auflagesteg gestaltetes Stützglied 13 liegt auf dem Ast 2 bzw. 3 auf, so daß dieser nicht nach oben wachsen kann, sondern in einer etwa waagrechten Lage gehalten wird.

An dem Schenkel 17 der Klammer 12 ist wiederum etwa rechtwinkelig von diesem abstehend ein Haltesteg 18 angeformt, so daß der Baumstamm 1 allseitig umgriffen und ein seitliches Abrutschen der Klammer 12 zuverlässig verhindert ist. Und da auch der Auflageschenkel 19 mit einem abstehenden Ansatz 2o versehen ist, ist der Haltebügel 11 seitlich arretiert. Durch eine Höhenverschiebung des Haltebügels 11 bzw. 11', deren Mittelteil 14 bzw. 14' unterschiedlich lang bemessen sind, können die Äste 2 bzw. 3 mehr oder weniger nach unten gedrückt und in ihrer Wachstumsrichtung beeinflußt werden.

28. Februar 1983   e-1
A 15o1

DIPL.-ING. GUIDO ENGELHARDT PATENTANWALT

7990 Friedrichshafen

Josef Friedrich Locher
7990 Friedrichshafen 5

Patentansprüche:

1. Vorrichtung zur Abstützung von an einem Baumstamm angewachsenen Ästen,

gekennzeichnet durch

einen dreiteiligen starren Haltebügel (11), dessen eines
Ende als an dem Baumstamm (1) einhängbare Klammer (12)
und dessen anderes über ein Zwischenstück (14) mit dieser
verbundenes Ende als auf einem Ast (2, 3) aufliegendes
Stützglied (13) ausgebildet ist.

2. Vorrichtung nach Anspruch 1,

dadurch gekennzeichnet,

daß die Klammer (12) des Haltebügels (11) aus einem etwa
rechtwinklig von dem Mittelstück (14) abstehenden U-förmig gebogenen Haken besteht, dessen parallel zueinander
verlaufende über einen Mittelsteg (15) miteinander verbundene Schenkel (16, 17) an dem Baumstamm (1) abgestützt sind.

./.

3. Vorrichtung nach Anspruch 2,

   d a d u r c h   g e k e n n z e i c h n e t ,

   daß an dem Ende des freien Schenkels (17) des Hakens ein
   etwa parallel zu dem Mittelstück (14) verlaufender entgegengesetzt zu diesem gerichteter Haltesteg (18) angeformt ist.

4. Vorrichtung nach einem der Ansprüche 2 oder 3,

   d a d u r c h   g e k e n n z e i c h n e t ,

   daß die Schenkel (16, 17) des Hakens entgegengesetzt zueinander konvex gekrümmt ausgebildet sind.

5. Vorrichtung nach einem oder mehreren der Ansprüche
   1 bis 4,

   d a d u r c h   g e k e n n z e i c h n e t ,

   daß das Stützglied (13) als ein von dem Mittelstück (14)
   abstehender Auflagesteg (19) oder als kreisförmig gebogene Öse ausgebildet ist, der etwa parallel zu dem an
   dem Mittelstück (14) angeformten Schenkel (16) des Hakens
   verläuft.

6. Vorrichtung nach Anspruch 5,

   d a d u r c h   g e k e n n z e i c h n e t ,

   daß der Auflagesteg (19) des Stützgliedes (13) konvex
   gekrümmt ausgebildet ist.

./.

7. Vorrichtung nach einem der Ansprüche 5 oder 6,

d a d u r c h   g e k e n n z e i c h n e t ,

daß an dem freien Ende des Auflagesteges (19) ein entgegengesetzt zu dem Mittelsteg (15) des Hakens verlaufender Ansatz (20) angeformt ist.

8. Vorrichtung nach einem oder mehreren der Ansprüche 1 bis 7,

d a d u r c h   g e k e n n z e i c h n e t ,

daß der Haltebügel (11) aus einem metallischen Stabmaterial, vorzugsweise aus verzinktem Draht, gebogen ist.

9. Vorrichtung nach einem oder mehreren der Ansprüche 1 bis 7,

d a d u r c h   g e k e n n z e i c h n e t ,

daß der Haltebügel (11) aus einem witterungsbeständigen Kunststoff hergestellt ist.

28. Februar 1983
A 1501    e-b

FIG. 1

0121047

¹/₂

FIG. 3

FIG. 2

# EUROPÄISCHER RECHERCHENBERICHT

**0121047**
Nummer der Anmeldung

EP 84 10 0994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 732 858 (KEMMER) <br> * Insgesamt * | 1,8 | A 01 G 17/10 |
| A | CH-A- 601 973 (ELTEBA) <br> * Spalte 2, Zeile 54 - Spalte 3, Zeile 20; Figuren 3,4 * | 1 | |
| A | US-A-1 488 380 (BLAKE) <br> * Insgesamt * | 1,2 | |

### RECHERCHIERTE SACHGEBIETE (Int. Cl. ³)

A 01 G

Der vorliegende Recherchenbericht wurde für alle Patentansprüche erstellt.

| Recherchenort <br> DEN HAAG | Abschlußdatum der Recherche <br> 07-06-1984 | Prüfer <br> HERYGERS J.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82